# EUROPÄISCHE PATENTSCHRIFT

(11) **EP 1 045 128 B1**
(45) Veröffentlichungstag und Bekanntmachung des Hinweises auf die Patenterteilung: **12.11.2003**
(21) Anmeldenummer: 00108351.8
(22) Anmeldetag: 14.04.2000
(51) Int. Cl.: F02G 5/00, F01B 17/04

(54) **Wärmekraftmaschine**
Machine with cogeneration
Machine à co-genération

(30) Priorität: 16.04.1999 DE 29906867 U
(43) Veröffentlichungstag der Anmeldung: 18.10.2000
(73) Patentinhaber: Spilling Energie Systeme GmbH, 20457 Hamburg (DE)
(72) Erfinder: Kiehne, Hartmut, 20457 Hamburg (DE)
(74) Vertreter: DIEHL GLAESER HILTL & PARTNER

(56) Entgegenhaltungen:
- GB-A- 2 007 313
- US-A- 3 668 974
- US-A- 3 970 055

## Beschreibung

Die Erfindung bezieht sich auf eine Wärmekraftmaschine (siehe z.B. US-A-3668974) mit mindestens einem hin- und hergehenden Kolben mit Kolbenringen, Kolbenstange und Kolbenstopfbuchse und Kurbel-trieb, in der hochgespannter Dampf in einem Arbeitszyklus den Kolben bewegt, der Zustrom von Dampf vermittels eines Schiebers mit Schieberringen, Schieberstange und Schieberstopfbuchse nach Durchlaufen eines Teils des Arbeitshubs beendet, ein Auslass geöffnet wird und der Kolben unter Verdichtung des Restdampfes bis zur Öffnung des Einlasses in die Ausgangslage zurückkehrt.

Unter einer Wärmekraftmaschine soll gemäß der Erfindung umfasst werden ein Dampfmotor, ein Gasexpansionsmotor, ein trocken laufender Gasexpansionsmotor, Dampflokomotivantriebe, Dampfmotorantriebe für Nutzfahrzeuge.

In der langen Geschichte der Dampfmaschinen- und Dampfmotorentechnik war es schon immer gewünscht, kein Öl mehr in den Dampf zu spritzen, um Kolben und Schieber zu schmieren, kein Kondensat mehr aufzubereiten und trotzdem von der bestechenden Zuverlässigkeit und Wirtschaftlichkeit dieses bewährten Antriebs zu profitieren.

Dampfmotorentechnik bedeutete von Anfang an, dass Kolben und Schieber sowie Stopfbuchsen mit speziellen temperaturtauglichen Zylinderölen geschmiert werden mussten, um ein Festfressen der gegeneinanderlaufenden Maschinenkomponenten zu vermeiden und die Dichtwirkung von Kolbenringen und Stopfbuchsen zu erhöhen. Jeder, der traditionelle Dampfmaschinen in ihrer offenen Bauweise schon einmal in Aktion gesehen hat, wird sich erinnern, dass der Heizer ständig für die gute Schmierung der beweglichen Teile sorgen musste. In der Schiffahrt, die noch bis in die 50er Jahre hinein Kolbendampfmaschinen zum Antrieb der Schiffsschrauben und Bordgeneratoren nutzte, war für diesen Zweck sogar ein spezieller Beruf entstanden: der Schmierer.

Die Schmierung der Kolben und Schieber in Dampfmotoren, die die schnellaufende gekapselte Weiterentwicklung der traditionellen Dampfmaschinen sind, wurde weiterentwickelt. Direkt von der Kurbenwelle angetriebene Plungerpumpen (kleine Kolbenpumpen) versorgten die verschiedenen Schmierstellen des Motors mit Zylinderöl. Über vor den Dampfeintrittsrohren eingebaute Düsen wurden geringe Mengen des Zylinderöls in den Dampf eingespritzt, die zwischen den Kolben- und Schieberringen und den Laufbuchsen einen Schmierfilm aufbauten, der den Verschleiß dieser Bauteile erheblich minimierte. Der aus dem Motor austretende Abdampf beinhaltete geringe Mengen des Öls, das zum Teil über Abdampfentöler, sogenannte Koaleszenzabscheider, bis auf einen ganz geringen Anteil aus dem Dampf wieder ausgeschieden wurde. Der kondensierte Dampf wurde danach nochmals in Absetzbecken und Aktivkohlefiltern, manchmal auch Koksfiltern gereinigt, so dass das dem Speisewassersystem zufließende Kondensat die zulässigen Höchstgrenzen für den Ölgehalt im Speisewasser von 1 ppm nicht überschritt. Viele, vor allem ältere Anlagen, verfügen bis heute nicht über Abdampfentöler, sondern ausschließlich über einfache Kokskondensatfilter.

Die von manchen Betreibern befürchtete innere Ölverschmutzung von Kesseln, Dampf- und Kondensatrohrleitungen und Wärmetauschern wurde in der Praxis nie als Nachteil festgestellt, weil jeder Kessel ohnehin regelmäßig abgeschlämmt werden muss, um eine zu hohe Chemikalienkonzentration zu vermeiden und damit auch eventuell vorhandene Ölreste entfernt werden. So mancher gemeldete Kesselschaden wurde als Ölschaden dargestellt, bis die wirklichen Ursachen gefunden wurden. Als Nachteil der Zylinderschmierung von Dampfmotoren muss die teure Anlagentechnik für die Ölzu- und abführung sowie der Bedienungsaufwand während des Betriebes angesehen werden.

Dieses war das der Erfindung zugrunde liegende Problem, nämlich nach Lösungen für den ölfreien Betrieb der Kolben und Schieber zu suchen.

Gelöst wird dieses Problem durch eine Wärmekraftmaschine der eingangs genannten Art, die dadurch gekennzeichnet ist, dass für diejenigen Bereiche des Dampfmotors, in denen Bauteile gegeneinander laufen, Materialpaarungen gewählt worden sind und zwar für die Kolbenringe, die Schieberringe und die Dichtringe in den Stopfbuchsen, Materialien mit selbstschmierenden Eigenschaften, Werkstoffen auf der Basis metall-imprägnierter Kohlegraphit (z.B. mit Antimon, Kupfer oder dgl.), die auf einer metallischen Oberfläche (im Bereich von 1000 HV, insbesondere über 3000 HV) laufen, wie Stahl oder Schleuderguß mit einer Cerrit-Beschichtung oder Tennifer QPQ-behandelt oder einem Korrosionsbeständigem Material mit harten Einschlüssen.

Die moderne Werkstofftechnik macht es schließlich möglich, Materialpaarungen zu entwickeln, die einen Betrieb ohne Flüssigschmierung mit geringen Verschleißraten ermöglichen. Das Öl wird dadurch als Schmiermittel gegen eine Trockenschmierung ersetzt. Damit können alle Schmierungseinrichtungen am Motor selbst sowie alle Anlagenteile zur Reinigung von Dampf und Kondensat entfallen, und der Betrieb braucht für die ausreichende Schmierung nicht mehr Sorge zu tragen. Der Einsatz der vorliegenden Erfindung umfasst allgemein gesagt Dampfmotoren ohne Zylinderölschmierung, aber auch trocken laufende Gasexpansionsmotoren.

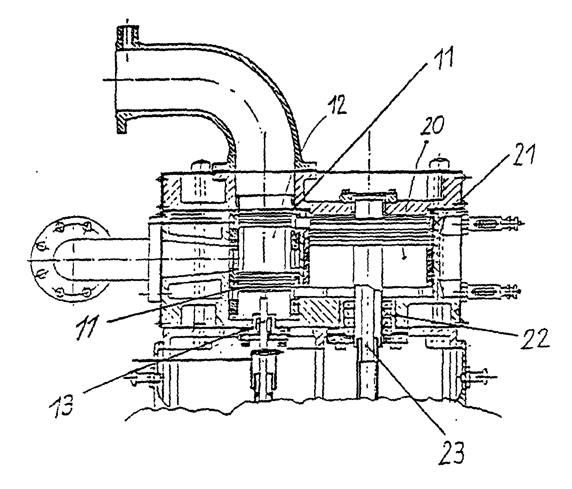

Die Erfindung wird nachstehend anhand der Zeichnung beispielsweise erläutert.

Die einzige Figur der Zeichnung zeigt eine Teilschnittansicht eines Dampfmotors gemäß der Erfindung.

Der Dampfmotor gemäß der Erfindung ist in der Figur lediglich zum Teil wiedergegeben. Zu erkennen sind im linken oberen Teil der Darstellung der Dampfein- und der Dampfauslass und insbesondere der Kolben 20 und der Schieber 12. Die Funktionsweisen dieser Teile sind hinlänglich bekannt, im Zusammenhang mit der vorliegenden Erfindung kommt es auf folgendes an:

Der Schieber 12 ist mit Schieberringen 11 ausgebildet, die in einer Schieberlaufbuchse hin- und hergehen. Der Schieber 12 wird über eine Schieberstange 13 angesteuert, die in einer Stopfbuchse hin- und hergeht. Der Kolben 20 ist mit Kolbenringen 21 ausgebildet, die einer Kolbenlaufbuchse hin- und hergehen. Am Kolben 20 ist eine Kolbenstange 23 befestigt, die in einer Kolbenstopfbuchse 22 gehaltert ist.

Die jeweils aufeinander einwirkenden Flächen der einzelnen Bauteile des Dampfmotors sind also:
Die Kolbenringe 21 und die Kolbenlaufbuchse
Die Kolbenstange 23 und die Kolbenstopfbuchse 22
die Schieberringe 11 mit der Schieberlaufbuchse
Die Schieberstange 13 mit der Schieberstopfbuchse.

Es sind nun diese jeweils Paare bildenden Teile, die in Übereinstimmung mit den Aussagen des Anspruchs so ausgebildet werden können, dass der Dampfmotor keine Schmierung braucht.

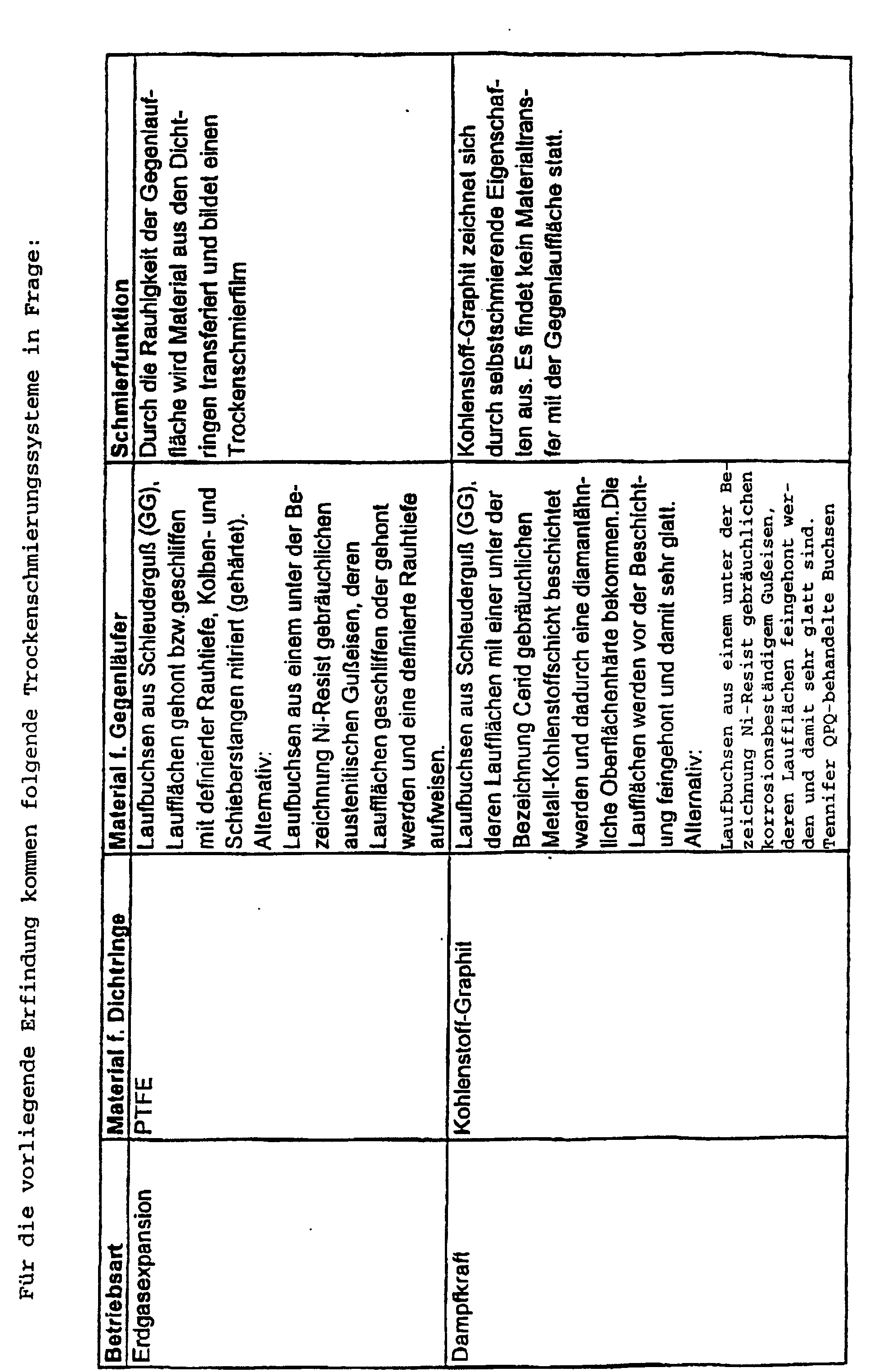

## Patentansprüche

1. Wärmekraftmaschine mit mindestens einem hin- und hergehenden Kolben (20) mit Kolbenringen (21), Kolbenstange (23) und Kolbenstopfbuchse und Kurbeltrieb, in der hochgespannter Dampf in einem Arbeitszyklus den Kolben (20) bewegt, der Zustrom von Dampf vermittels eines Schiebers (12) mit Schieberringen (11), Schieberstange (13) und Schieberstopfbuchse nach Durchlaufen eines Teils des Arbeitshubs beendet, ein Auslass geöffnet wird und der Kolben (20) unter Verdichtung des Restdampfes bis zur Öffnung des Einlasses in die Ausgangslage zurückkehrt, **dadurch gekennzeichnet, dass** für diejenigen Bereiche des Dampfmotors, in denen Bauteile gegeneinander laufen, Materialpaarungen gewählt worden sind und zwar für die Kolbenringe (21), die Schieberringe (11) und die Dichtringe in den Stopfbuchsen, Materialien mit selbstschmierenden Eigenschaften, Werkstoffen auf der Basis metall-imprägnierter Kohlegraphit, die auf einer metallischen Oberfläche laufen, wie Stahl oder Schleuderguß mit einer Cerrit-Beschichtung oder Tennifer QPQ-behandelt oder einem Korrosionsbeständigem Material mit harten Einschlüssen.

## Claims

1. Heat engine with at least one reciprocating piston (20) having piston rings (21), piston rod (23) and piston packing gland and crank operation, in which high-pressure steam moves the piston (20) in an operating cycle, the inflow of steam is terminated by means of a slide valve (12) with slide rings (11) and slide valve spindle (13) and slide valve packing gland after passing part of the working stroke, an outlet is opened and the piston (20) returns under compression of the residual steam to the port of the inlet into the initial position, **characterised in that** for those areas of the steam engine, in which components are counterrotating, material pairs have been chosen and that for the piston rings (21), the slide rings (11) and the sealing rings in the packing glands, said materials comprising self-lubricating properties, materials based on metallized carbon graphite running on a metal surface, such as steel or centrifugal casting with a cerite coating or Tennifer QPQ-treated or a corrosion-resistant material comprising hard inclusions.

## Revendications

1. Moteur thermique avec au moins un piston (20) se déplaçant alternativement dans un sens et dans l'autre, avec des segments de piston (21), une tige de piston (23) et un presse-étoupe de piston et un embiellage, dans lequel de la vapeur à haute pression déplace le piston (20) en un cycle de travail, l'afflux de vapeur est interrompu au moyen d'un tiroir (12) avec des segments de tiroir (11), une tige de tiroir (13) et un presse-étoupe de tiroir, après la traversée d'une partie de la course de travail, un orifice d'échappement est ouvert et le piston (20) retourne dans la position initiale moyennant compression de la vapeur restante jusqu'à l'ouverture de l'admission, **caractérisé en ce que** pour celles des zones du moteur à vapeur dans lesquelles des composants se déplacent l'un par rapport à l'autre, des appariements de matériau ont été choisis, et en l'occurrence des matériaux à propriétés autolubrifiantes pour les segments de piston (21), les segments de tiroir (11) et les bagues d'étanchéité dans les presse-étoupe, des matériaux à base de carbone graphite imprégné de métal, qui glissent sur une surface métallique, telle de l'acier ou de la fonte centrifugée avec un placage de cérite ou ayant subi une nitruration QPQ au bain de sels fondus, ou avec un matériau inoxydable avec des inclusions dures.
